# EUROPEAN PATENT APPLICATION

(11) **EP 4 742 630 A2**
(43) Date of publication of application: **13.05.2026**
(21) Application number: 25220630.5
(22) Date of filing: 29.06.2021
(51) Int. Cl.: H04L 67/1097

(54) **METHOD FOR PROCESSING DATA BY USING INTERMEDIATE DEVICE, COMPUTER SYSTEM, AND INTERMEDIATE DEVICE**

(30) Priority: 02.07.2020 CN 202010627388; 13.11.2020 CN 202011269034
(62) Divisional of application: 21832993.6
(71) Applicant: Huawei Technologies Co., Ltd., Shenzhen, Guangdong 518129 (CN)
(72) Inventor: XIONG, Yanhui, Shenzhen, 518129 (CN); YOU, Jun, Shenzhen, 518129 (CN); LIU, Yong, Shenzhen, 518129 (CN); WANG, Qiaoling, Shenzhen, 518129 (CN); LIN, Qinliang, Shenzhen, 518129 (CN)
(74) Representative: Pfenning, Meinig & Partner mbB

(57) **Abstract**

Embodiments of this application provide a method for processing data by using an intermediate device, a computer system, and an intermediate device. The computer system includes a computing node, a storage node, and an intermediate device. A service runs in the computing node. The storage node stores data of the service. The service is provided with a storage space, and the service performs an operation on the data of the service in the storage node by accessing the storage space. For example, the storage space is a persistence LOG (PLOG) space. In embodiments of this application, metadata of the storage space is stored in the intermediate device. The intermediate device manages the metadata of the storage space, and implements a data operation between the computing node and the storage node based on the metadata of the storage space. For example, the intermediate device is a switch. According to the solutions provided in this application, a load of the computing node and a data access latency can be reduced.

## Description

### TECHNICAL FIELD

This application relates to the field of computer technologies, and in particular, to a method for processing data by using an intermediate device, a computer system, and an intermediate device.

### BACKGROUND

Usually, a multi-node computer system includes a plurality of computing nodes and storage nodes. To achieve concurrent access by the plurality of computing nodes to storage spaces for applications, the storage nodes manage the storage spaces for the applications in related technologies. Because the storage node manages the storage space of the application, a load of the computing node and a data processing latency increase when the computing node accesses application data stored in the storage node. For example, when the computing node needs to write data of an application to a storage space corresponding to the application, the computing node first requests the storage node to allocate, for the data, a write address in the storage space corresponding to the application. After obtaining the write address, the computing node sends, to the storage node, a write request for writing the data to the write address. In this way, when writing the data, the computing node first needs to apply to the storage node for allocation of the write address. After the write address is allocated, the computing node sends, to the storage node, the write request for writing the data to the write address. That is, the computing node needs to send at least two requests to the storage node. This leads to increase in the load of the computing node and a data write latency.

### SUMMARY

Embodiments of this application provide a data processing method, a computer system, and an intermediate device. A storage space of an application is managed by an intermediate device connected to a computing node and a storage node, thereby effectively reducing a load of the computing node and reducing a data write latency.

To achieve the foregoing objectives, a first aspect of this application provides a computer system. The computer system includes a computing node, a storage node, and an intermediate device. A service runs in the computing node. The storage node stores data of the service. The service is provided with a storage space, and the service performs an operation on the data of the service in the storage node by accessing a storage space. For example, the storage space is a persistence LOG (PLOG) space. In this embodiment of this application, metadata of the storage space is stored in the intermediate device. The intermediate device manages the metadata of the storage space, and implements a data operation between the computing node and the storage node based on the metadata of the storage space.

The metadata of the storage space of the service is stored on the intermediate device, so that the intermediate device manages the storage space of the service based on the metadata. In this way, a load of the computing node and a latency in writing data can be reduced. For example, when the operation is a write operation, the computing node only needs to send the write request to the intermediate device. The intermediate device allocates an address in the storage space for the write request based on the metadata, and writes data to the storage device according to the allocated address. Because the computing node only needs to send the request to the intermediate device, a load of the computing node and a latency in writing data are reduced.

In an implementation of the first aspect, the metadata of the storage space includes metadata of a logical storage space, the metadata of the logical storage space includes an identifier of the logical storage space, address information of the logical storage space, and address information of a physical storage space corresponding to the logical storage space; and the physical storage space belongs to a space in the storage node.

By recording, in the metadata, the address information of the logical storage space of the application and the address information of the physical storage space in the storage node, the intermediate device may map an operation on the logical storage space to an operation on the physical storage space in the storage node. In this way, an operation on the service data stored in the physical storage space that is in the storage node is implemented.

In an implementation of the first aspect, there are a plurality of intermediate devices between the computing node and the storage node, the computing node designates a first intermediate device in the plurality of intermediate devices for the logical storage space, and the first intermediate device is configured to store the metadata of the logical storage space. For example, the computing node may select the first intermediate device from the plurality of intermediate devices based on the identifier of the logical storage space.

In this way, a plurality of storage spaces of the application are distributed to different intermediate devices. In this way, load balancing of the intermediate device can be achieved, and data processing efficiency of the application can be improved.

In an implementation of the first aspect, the logical storage space is a persistence LOG space.

In an implementation of the first aspect, the intermediate device is a network switch device.

Because communication between the computing node and the storage node is implemented through a network switch, the metadata of the storage space of the application is stored in the network switch, so that the storage space of the application can be conveniently managed.

In an implementation of the first aspect of the present invention, when writing the service data to the storage node, the computing node first sends a write request to the intermediate device. The intermediate device allocates a first address in the logical storage space to the to-be-written data; determines, in the storage node, a second address that corresponds to the first address and to which the to-be-written data is written; and requests the storage node to write the to-be-written data to the second address.

In a process of writing data, because the computing node only needs to send the write request to the intermediate device, a load of the computing node and a latency of the write request are reduced.

In an implementation of the first aspect, after allocating the logical storage space to the application, the computing node requests the intermediate device to allocate the physical storage space in the storage node to the logical storage space. After receiving the request, the intermediate device requests the storage node to allocate the physical storage space to the logical storage space. In this way, a correspondence between the logical storage space of the application and the physical storage space in the storage node is established, and then the application can access data in the physical storage space through the logical storage space.

In an implementation of the first aspect, the intermediate device allocates an address in the logical storage space to each write request based on a sequence of receiving at least two write requests, or the intermediate device returns, based on the sequence of receiving the at least two write requests, a message indicating completion of each write request to the computing node.

A completion message or an allocated address of a write request is returned according to a sequence of write requests, so that to-be-written data of the write requests can be sequentially stored in storage nodes. In this way, a hole in storage media of the storage nodes can be prevented.

In an implementation of the first aspect, after receiving a read-only state setting request sent by the computing node for the logical storage space, the intermediate device sets a status of the logical storage space to a read-only state when no conflicts occur in the logical storage space.

In an implementation of the first aspect, the intermediate device is further configured to: after receiving a delete request sent by the computing node for the logical storage space, when no conflicts occur in the logical storage space, set a status of the logical storage space to a delete state, and indicate the storage node to delete the physical storage space corresponding to the logical storage space.

In the foregoing two implementations, the intermediate device determines whether there is an operation conflict in the logical storage space, to implement status mutual exclusion control. This reduces a quantity of times of communication between the computing node and the storage node, and improves processing efficiency of the computer system.

In an implementation of the first aspect, after receiving the first write request sent by the computing node, the method further includes: obtaining a plurality of fragments of the to-be-written data in the first write request; and the determining to write the to-be-written data in the first write request to a first address of the storage node includes: determining to write the plurality of fragments to first addresses of a plurality of storage nodes.

In this implementation, the intermediate device stores the plurality of fragments of the to-be-written data into the plurality of storage nodes. This ensures data reliability. In addition, because the intermediate device serves as a convergence point and gives a high performance in processing packets, an amount of data that needs to be transmitted by the computing node is reduced while reliability is ensured.

In an implementation of the first aspect, the intermediate device allocates the second address to the first write request among unallocated spaces of the logical storage space according to an ascending order of addresses.

In an implementation of the first aspect, the storage node includes a first storage node and a second storage node. The second address corresponds to a first address that is in the first storage node and into which the to-be-written data is written, and a first address that is in the second storage node and into which the to-be-written data is written. That the requesting the storage node to write the to-be-written data into the first address includes: requesting the first storage node to write the to-be-written data to the first address that is in the first storage node and to which the to-be-written data is written; and requesting the second storage node to write the to-be-written data to the first address that is in the second storage node and to which the to-be-written data is written.

In this implementation, the intermediate device writes data copies to the plurality of storage nodes, thereby ensuring data reliability. In addition, because of the position taken by the intermediate device in the network and high performance of the intermediate device in processing packets, an amount of data that needs to be transmitted by the computing node to the intermediate device is reduced while reliability is ensured.

In an implementation of the first aspect, the intermediate device records a queue. The queue records, according to a sequence of receiving times, to-be-processed write requests that are for the logical storage space and that are received from the computing node. When it is determined that a first write request is a request received earliest in the queue, it is determined that other write requests that are for the logical storage space and received before the first write request are all completed.

In this implementation, the sequence of receiving write requests is recorded in a queue, so that the sequence of returning information indicating completion of the write requests can be conveniently and accurately controlled.

In an implementation of the first aspect, the intermediate device is further configured to establish a QP queue corresponding to the computing node and N QP queues respectively corresponding to N storage nodes, to maintain connection information. In this way, reliable one-to-N multicast communication can be implemented.

In an implementation of the first aspect, when the intermediate device receives a read request for the logical storage space, if a status of the logical storage space is a delete state, the intermediate device blocks the read request, or returns information indicating that the status of the logical storage space is the delete state to the computing node.

A second aspect of the present invention provides a method applied to the computer system provided in the first aspect of the present invention. Steps included in the method are performed by the computing node, the intermediate device, and the storage node of the computer system. A function corresponding to each step in the method is the same as a function performed by the computing node, the proxy device, and the storage node in the computer system. Beneficial effects are also the same. Details are not described herein again.

A third aspect of the present invention provides a data processing method performed by an intermediate device, where the intermediate device is connected to a computing node and a storage node. A service runs in the computing node. The storage node stores data of the service. The intermediate device first receives a first write request that is for the data of the service and that is sent by the computing node, determines to write to-be-written data in the first write request to a first address of the storage node, and requests the storage node to write the to-be-written data to the first address after determining the first address.

Metadata of the storage space of the service is stored on the intermediate device. In this way, the computing node only needs to send the write request to the intermediate device. The intermediate device allocates an address in the storage space for the write request based on the metadata, and writes data to the storage device according to the allocated address. Because the computing node only needs to send the request to the intermediate device, a load of the computing node and a latency in writing data are reduced.

Functions implemented in other steps performed by the proxy node in the method are the same as functions implemented by the intermediate device in the computer system in the first aspect. Beneficial effects are the same. Details are not described herein again.

A fourth aspect of this application provides a data processing apparatus, where the apparatus is deployed in an intermediate device, and the intermediate device is connected to a computing node and a storage node. A service runs in the computing node. Data of the service is stored on the storage node. The processing apparatus includes several modules, where the modules are configured to perform the steps in the data processing method provided in the third aspect of this application, and module division is not limited herein. For specific functions performed by the modules of the data processing apparatus and beneficial effects, refer to functions of the steps in the data processing method provided in the third aspect of this application. Details are not described herein again.

A fifth aspect of this application provides another computer system. The computer system includes a computing node, a storage node, and an intermediate device. The computing node accesses the storage node through the intermediate device. An application runs in the computing node. The storage node stores data of the application. The computing node is configured to designate a storage space for the application data, and send a first allocation request, where the first allocation request is used to request a physical storage space in a storage node corresponding to the storage space. The intermediate device is configured to receive the first allocation request sent by the computing node, send a second allocation request to the storage node based on the first allocation request, obtain the physical storage space allocated by the storage node, and establish and store metadata of the application based on information of a logical storage space and information of the physical storage space.

The metadata is stored in the intermediate device, and a storage space in a storage node is allocated to the storage space of the application. As a result, a load of the storage node and a load of the computing node can be reduced, and data transmission efficiency can be improved.

In an implementation of the fifth aspect of this application, the first allocation request carries an identifier and a volume of the logical storage space, and the metadata includes: the identifier of the logical storage space, the volume of the logical storage space, an available address of the logical storage space, and address information of the physical storage space corresponding to the logical storage space.

In an implementation, the logical storage space is a persistence LOG space, and the computing node designates an identifier and a volume of the persistent LOG space.

In an implementation of the fifth aspect of this application, the computing node is further configured to send a first write request, where the first write request carries first data of the application and an identifier of a logical storage space corresponding to the first data; the intermediate device is further configured to receive the first write request, determine, in the storage node, a first physical address for the first data based on the metadata of the application, and send a second write request to the storage node based on the first physical address; and the storage node is further configured to receive the second write request, and store the first data at the first physical address.

In an implementation of the fifth aspect of this application, after receiving the first write request, the intermediate device allocates a first logical space address to the first data based on the identifier of the logical storage space and a volume of the first data; and determine, based on a correspondence that is between the logical storage space and the physical storage space and that is recorded in the metadata, a first physical address corresponding to a first logical space address.

In an implementation of the fifth aspect of this application, the intermediate device is further configured to: receive a storage completion notification sent by the storage node, and confirm, based on the notification, that execution of the first write request is completed.

In an implementation of the fifth aspect of this application, the intermediate device updates the information about the metadata of the application based on the first write request.

In an implementation of the fifth aspect of this application, the computer system includes a plurality of intermediate devices, and the computing node is further configured to select one intermediate device from the plurality of intermediate devices, to send the first allocation request or the first write request to the selected intermediate device.

A sixth aspect of this application provides a computer system. The computer system includes a computing node, a storage node, and an intermediate device. The computing node accesses the storage node through the intermediate device. The computing node is configured to send a first write request to the intermediate device, where the first write request is for a logical storage space, and the logical storage space corresponds to a storage space in the storage node. The intermediate device is configured to receive the first write request, and when determining write requests that are for the logical storage space and received before the first write request are all completed, notify the computing node that the first write request is completed.

A write completion request is returned by the intermediate device according to a sequence of receiving the write requests. In this way, a hole in storage spaces in storage nodes can be prevented while parallel processing of the write requests of different computing nodes is implemented.

For other functions implemented by the computer system, refer to the functions provided by the computer system in the first aspect. Details are not described herein again.

A seventh aspect of this application provides an intermediate device, where the intermediate device includes a processing unit and a storage unit, the storage unit stores executable code, and when the processing unit executes the executable code, any one of the foregoing data processing methods is implemented.

An eighth aspect of this application provides an intermediate device, where the intermediate device includes: a communication interface, configured to transmit data between a storage node and a computing node; and a processing unit, configured to process data received by the communication interface, to perform any one of the foregoing data processing methods.

A ninth aspect of this application provides a storage medium, where the storage medium stores executable instructions, and a processor of an intermediate device executes the executable instructions in the storage medium to implement the methods provided in the second aspect and the third aspect of this application.

A tenth aspect of this application provides a program product, where a processor of an intermediate device runs the program product, to control the processor to perform the methods provided in the second aspect and the third aspect of this application.

### BRIEF DESCRIPTION OF DRAWINGS

Embodiments of this application are described with reference to accompanying drawings, so that embodiments of this application can be clear.
FIG. 1 is a schematic diagram of an architecture of a computer system according to an embodiment of this application;
FIG. 2 is a flowchart of a method for writing data in a computer system according to an embodiment of this application;
FIG. 3 is a flowchart of a process A performed when a remaining space of a PLOG i is insufficient;
FIG. 4 is a schematic diagram of a process in which computing nodes C0 and C1 perform writing on a PLOG j in parallel;
FIG. 5 is a schematic diagram of content of a write request queue corresponding to a PLOG j;
FIG. 6 is a flowchart of a process B performed when a remaining space of a PLOG i is sufficient;
FIG. 7 is a flowchart of a method for writing data in a computer system according to another embodiment of this application;
FIG. 8 is a schematic diagram of a process of writing data in a computer system in the case of fragment-based storage;
FIG. 9 is a schematic diagram of a process of reading data in a computer system in the case of fragment-based storage;
FIG. 10 is a flowchart of a method for reading data in a computer system according to an embodiment of this application;
FIG. 11 is a flowchart of a method for deleting data in a computer system according to an embodiment of this application;
FIG. 12 is a flowchart of a method for setting a read-only state in a computer system according to an embodiment of this application;
FIG. 13 is a schematic diagram of a structure of a data processing apparatus according to an embodiment of this application;
FIG. 14 is a schematic diagram of a structure of an intermediate device according to an embodiment of this application;
FIG. 15 is a schematic diagram of a structure of an intermediate device according to an embodiment of this application; and
FIG. 16 is a schematic diagram of a cloud service system according to an embodiment of this application.

### DESCRIPTION OF EMBODIMENTS

The following describes technical solutions in embodiments of this application with reference to the accompanying drawings.

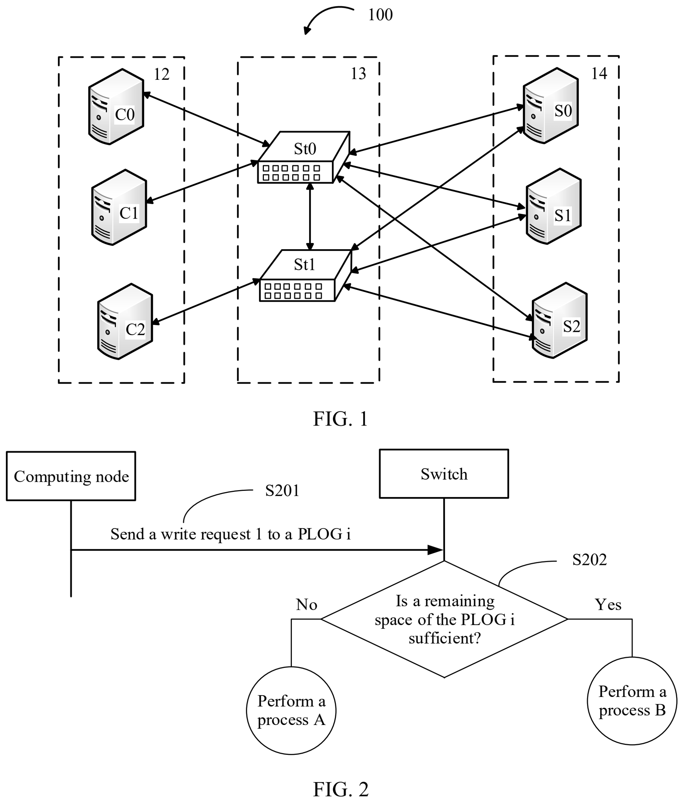

FIG. 1 is a schematic diagram of an architecture of a computer system 100 according to an embodiment of this application. As shown in FIG. 1, the computer system 100 includes a computing layer 12, a network layer 13, and a storage layer 14. The computing layer 12 includes a plurality of computing nodes. FIG. 1 shows example computing nodes C0, C1, and C2. The network layer 13 includes a plurality of intermediate devices. FIG. 1 shows example intermediate devices St0 and St1. The storage layer 14 includes a plurality of storage nodes. FIG. 1 shows example storage nodes S0, S1, and S2. The computing node and the storage node may be physical servers, or may be virtual entities abstracted based on a general-purpose hardware resource, such as a virtual machine and a container. The intermediate device may be a programmable network connection device, for example, a switch. An example in which an intermediate device is a switch is used for description. For example, the plurality of computing nodes may be used as application servers of a plurality of applications (Applications, APPs), to provide service processing for a user of a user terminal. For example, the plurality of storage nodes may be configured to store service data of an APP. The storage node may store the service data by using a storage medium such as a memory or a hard disk drive. The non-volatile memory medium is featured by a large capacity and a high access speed, and has characteristics of a non-volatile memory. Therefore, a storage medium in embodiments of the present invention is a non-volatile memory medium, and the non-volatile memory includes, for example, a storage class memory (Storage class memory, SCM). The non-volatile memory medium is merely an example for description. The embodiments of the present invention are not limited thereto.

In the multi-node distributed computer system shown in FIG. 1, each computing node is connected to at least one switch, and each switch is connected to a plurality of storage nodes, so that the computing node can access the plurality of storage nodes through the switch. In addition, switches are directly or indirectly connected, so that the computing node can access the storage node through any switch. A connection between the computing node and the switch and a connection between the switch and the storage node may be in various forms, for example, a remote direct memory access (Remote direct memory access, RDMA) connection or a transmission control protocol (Transmission Control Protocol, TCP) connection. The plurality of computing nodes may perform operations such as writing and reading service data on the storage node through the switch.

In related technologies, a computing node is directly connected to a storage node, and the computing node accesses a segment of a logical storage space corresponding to a storage space of the storage node, to access the storage space of the storage node. For example, the logical storage space is a Persistence LOG (Persistence LOG, PLOG) space. The PLOG is identified by a unique identifier PLOG ID of the PLOG. Data stored in the PLOG is stored through appending, that is, stored data is not modified through overwritten, but a modification is appended and stored in a new address. Usually, the PLOG corresponds to a contiguous physical storage space in a medium such as an SCM or a solid state disk (Solid State Disk, SSD) in a storage node. The physical storage space is a storage space provided by the storage node for an external device, and the external device may use the storage space to access data. For media such as an SCM, the physical storage space is a physical address at which data is actually stored. However, for storage media such as an SSD, the physical storage space is not a physical address at which data is actually stored.

In the related technology, metadata of a PLOG is stored in a storage node. The metadata includes information such as an ID of the PLOG, an address of a storage space in a storage node corresponding to the PLOG, and an address of an unallocated space of the PLOG. The storage node manages the PLOG based on the metadata of the PLOG. For example, when a computing node is to write data to the storage node by using the PLOG, the computing node first requests the storage node to allocate an address in the PLOG to the data. After allocating an address in the unallocated storage space in the PLOG to the data based on the PLOG metadata, the storage node returns the allocated address to the computing node. After obtaining the allocated address, the computing node sends a write request to the storage node, to write the data to the storage node. In this related technology, when writing data to the storage node, the computing node needs to communicate with the storage node for a plurality of times. This increases a load of the computing node, and increases a latency in writing data.

In this embodiment of this application, as shown in FIG. 1, the computing nodes are connected to the storage nodes by using the switch. The switch serves as an intermediate device to store metadata of a PLOG and manage the metadata of the PLOG. In this way, the switch can manage the PLOG by managing the metadata of the PLOG. The metadata of the PLOG stored in the switch includes an ID of the PLOG, address information of a storage space (for example, may be a start address and a length of the storage space) in a storage node corresponding to the PLOG, address information of an unallocated space of the PLOG (for example, may be a start address of the unallocated space of the PLOG), and the like. When the computing node needs to write data to the PLOG in response to an operation performed by a user on an application, the computing node sends a write request for writing the data to the PLOG to the switch. After receiving the write request, the switch allocates a write address in the PLOG to the write request based on the metadata of the PLOG; determines, based on the write address, an address for writing the to-be-written data that is in the write request to the storage node; and sends, to the storage node, a request for writing the to-be-written data to the determined address in the storage node. In this way, the storage node writes the to-be-written data to a storage space of the storage node. In technical implementation of this embodiment of this application, the metadata of the PLOG is stored in the switch, so that the switch manages the PLOG. In this way, when writing data to the storage node, the computing node only needs to send a data write request to the switch, and does not need to send an address allocation request. This reduces a load of the computing node and a latency of a write request.

In addition, when the switch manages the PLOG, the switch processes write requests according to a sequence of receiving the write requests, to sequentially allocate addresses in the PLOG to the write requests. After allocating the addresses, the switch writes to-be-written data that is in the write requests to the storage nodes. After the storage nodes complete writing data, the switch returns the write requests according to the sequence of receiving the write requests, to prevent a hole in storage spaces of the storage nodes corresponding to the PLOG.

The following describes in detail a data processing process performed by the computer system shown in FIG. 1.

FIG. 2 is a flowchart of a method for writing data in a computer system according to an embodiment of this application.

As shown in FIG. 2, in step S201, a computing node sends a write request 1 for a PLOG i.

In flowcharts of FIG. 2, FIG. 3, FIG. 6, FIG. 7, FIG. 10, FIG. 11, and FIG. 12 in this specification, a computing node may be any computing node in the plurality of computing nodes in FIG. 1, and a switch is a switch corresponding to a PLOG on which operations are performed, a storage node is a storage node corresponding to the PLOG. In this embodiment of this application, one PLOG is managed by only one switch. After the computing node generates a new PLOG, it is determined that the PLOG belongs to a switch. The determined switch is a switch corresponding to the PLOG. The corresponding switch records metadata of the PLOG, and manages the PLOG based on the metadata. A storage node corresponding to the PLOG is a storage node specified by the computing node for the PLOG after the computing node generates a new PLOG. For example, a specific method for determining a switch to which a PLOG is homed may be as follows. After generating a new PLOG, a computing node performs Hash calculation for an ID of the PLOG, to home the PLOG to a specific switch, and send information of the PLOG to the switch, so that the switch manages the PLOG. Another method for determining a switch to which a PLOG is homed may be as follows. After generating a new PLOG, a computing node may send information of the PLOG to any switch connected to the computing node, so that a plurality of switches determine, through negotiation, and record a mapping relationship between the PLOG and a switch; a switch that receives the information of the PLOG may forward the PLOG information to a corresponding switch based on the mapping relationship; and the corresponding switch manages the PLOG.

An example including the computing node C0, the switch St0, and the storage nodes S0, S1, and S2 is used for description.

It is assumed that the computing node in FIG. 2 is the computing node C0 in FIG. 1. The computing node C0 includes a PLOG function layer providing invocation interfaces for applications, and the invocation interfaces include, for example, a PLOG application interface and a PLOG write interface. When an application in the computing node C0 needs to write data to the computer system, the application first obtains, from the PLOG function layer, a pre-recorded ID of a currently writable PLOG, and determines that the currently writable PLOG is a PLOG i. Then the application invokes a write interface at the PLOG function layer. In this way, the computing node C0 sends a write request 1 for the PLOG i to the switch.

Specifically, the application in the computing node C0 invokes the write interface, and inputs an identifier of PLOG i, a storage address of to-be-written data, and a length of the to-be-written data. The PLOG function layer invokes a data sending interface of a network interface card based on the input parameters, obtains the to-be-written data according to the storage address and the length of the to-be-written data, assembles the to-be-written data to a data packet of the write request 1 based on the to-be-written data, and sends the data packet to the switch, where the write request 1 includes the identifier of the PLOG i and the to-be-written data. In an implementation, the computing node C0 may determine, by performing hash calculation on the "PLOG i", a switch corresponding to the PLOG i, and send the data packet to the corresponding switch. In another implementation, the computing node C0 may send the data packet to any switch connected to the computing node C0, and the switch forwards, based on a locally stored mapping relationship between a PLOG and a switch, the data packet to the switch corresponding to the PLOG i. It is assumed that the PLOG i corresponds to a switch St0. Therefore, the write request 1 for the PLOG i is sent to the switch St0.

Step S202. The switch determines whether a remaining space of the PLOG i is sufficient.

As described above, the switch St0 corresponds to the PLOG i. Therefore, metadata of the PLOG i is recorded in the switch St0, so that the PLOG i is managed based on the metadata. The metadata of the PLOG i includes, for example, information such as the identifier of the PLOG i, address information of the PLOG i (for example, a start address of an unallocated storage space of the PLOG i and a volume of the PLOG i), and address information of a storage space in a storage node corresponding to the PLOG i. Because the PLOG i is a logical storage space and an address in the PLOG i is an offset address starting from 0, the switch can obtain a volume of the remaining space of the PLOG i by subtracting the start address of the unallocated storage space of the PLOG i from the volume of the PLOG i.

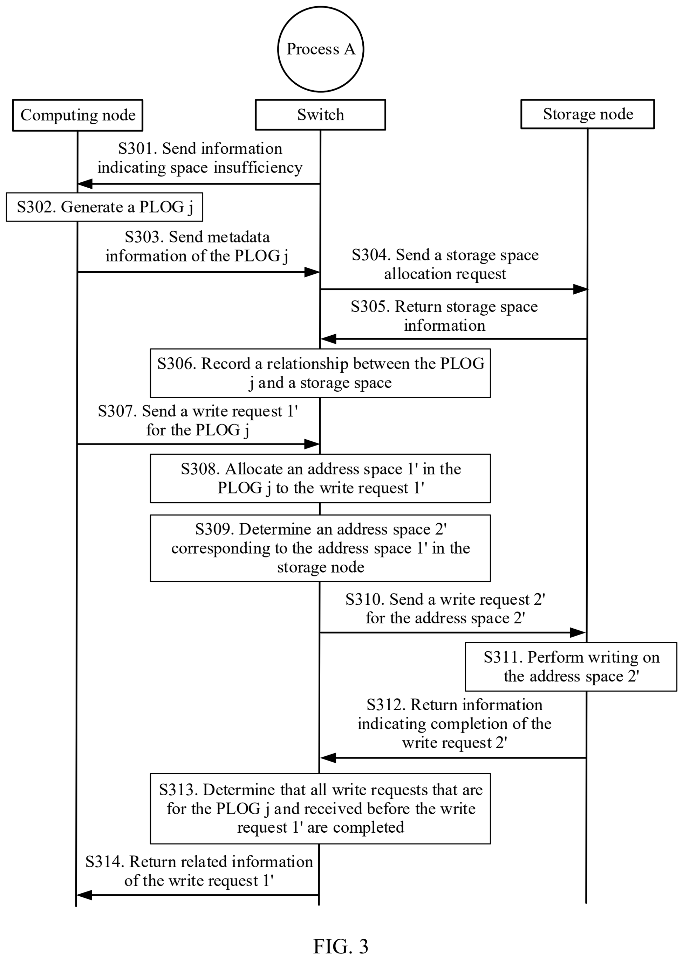

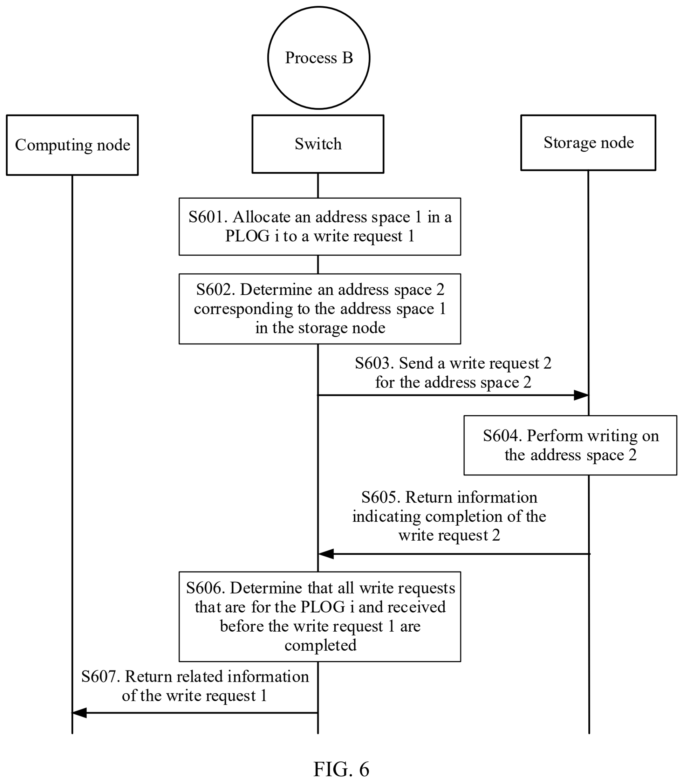

After receiving the write request 1, the switch compares the length of the to-be-written data with the volume of the remaining space of the PLOG i, to determine whether the remaining space is sufficient for writing the to-be-written data. If the remaining space is insufficient, the switch performs step S301 in a process A shown in FIG. 3. If the remaining space is sufficient, the switch performs step S601 in a process B shown in FIG. 6. The following separately describes the process A in FIG. 3 and the process B in FIG. 6.

FIG. 3 is a flowchart of the process A performed when the remaining space of the PLOG i is insufficient. The process A includes a process of generating a new PLOG j and writing to-be-written data to the PLOG j.

Step S301. After determining that the remaining space of the PLOG i is insufficient in step S202, the switch sends, to the computing node, information indicating that the space of the PLOG i is insufficient.

Step S302. The computing node generates the PLOG j.

For example, in the computing node C0, after receiving the information indicating that the space of the PLOG i is insufficient, the application may invoke a PLOG application interface at the PLOG function layer, to send a request for applying for a new PLOG to the PLOG function layer. In the application request, information such as a storage node corresponding to the newly applied PLOG, a volume of the PLOG, and an initial status of the PLOG is specified. The initial status information indicates, for example, a readable and writable state. In the computer system, to ensure reliability of data storage, same data may be stored in a plurality of storage nodes, that is, each storage node stores one copy of the data. In this way, when a storage node is abnormal, data may be obtained from another storage node. In this case, a plurality of storage nodes corresponding to the newly applied PLOG are specified in the foregoing application request. For example, the foregoing application request may specify that the newly applied PLOG corresponds to the storage nodes S0, S1, and S2, that is, data written to the PLOG is stored in the storage nodes S0, S1, and S2.

After receiving the request for a new PLOG from the application, the PLOG function layer in the computing node C0 generates a new PLOG ID, and returns the ID to the application. The newly generated PLOG ID may be represented as "PLOG j". For example, the ID is generated according to a sequence of PLOG numbers. For example, if the PLOG i is a PLOG 1, it is determined that the "PLOG j" is a PLOG 2. It should be understood that, in this embodiment of this application, determining the PLOG ID is not necessarily based on the sequence of PLOG numbers, as long as the PLOG ID can uniquely identify the newly generated PLOG. For example, an ID of a deleted PLOG may be reused as an ID of the new PLOG.

Step S303. The computing node sends metadata of the PLOG j to the switch.

After the PLOG function layer of the computing node C0 generates the PLOG j as described above, in an implementation, the computing node C0 may determine, according to a predetermined rule, a switch corresponding to the PLOG j, and send the metadata of the PLOG j to the switch corresponding to the PLOG j; or in another implementation, the computing node C0 may send the metadata information of the PLOG j to any switch connected to the computing node C0, and the switch enables a plurality of switches to determine, through negotiation, a switch corresponding to the PLOG j, and send the metadata of the PLOG j to the switch corresponding to the PLOG j. It is assumed that the switch corresponding to the PLOG j is a switch St0, that is, the metadata of the PLOG j is sent to the switch St0. The sent metadata includes information such as an identifier of the PLOG j, storage nodes (that is, S0, S1, and S2) corresponding to the PLOG j, a volume of the PLOG j, and an initial status of the PLOG j.

Step S304. The switch sends a storage space allocation request to the storage node.

After receiving the metadata of the PLOG j, the switch St0 locally stores the metadata of the PLOG j, and adds address information of an unallocated storage space of the PLOG j to the metadata, for example, a start address of the unallocated storage space. In this case, because the PLOG j is not used yet, the start address of the unallocated storage space of the PlOG j is a default offset address 0.

The switch St0 may record metadata of each PLOG in a form of a table. Table 1 shows metadata of PLOGs managed by the switch St0.

**Table 1**

| | |
|---|---|
| PLOG 0 | Status=Delete, Offset=200, ... |
| PLOG 1 | Status=R, Offset=100, ... |
| ... | |
| PLOG j | Status=RW, Offset=0, Volume=2M, S0: Addr= / S1: Addr= / S2: Addr=, ... |
| ... | |

As shown in Table 1, "Status" indicates a status of the PLOG, and the status of the PLOG may include a readable and writable (RW) state, a read-only (R) state, and a delete (Delete) state. The RW state indicates that a storage space in a storage node corresponding to a PLOG is readable and writable. The R state indicates that a storage space in a storage node corresponding to a PLOG is readable but not writable. The delete state indicates that deletion is being performed on a storage space corresponding to a PLOG in a storage node corresponding to the PLOG. In Table 1, "Offset" indicates a start address of an unallocated storage space of a PLOG, and "Volume" indicates a volume of a PLOG. In addition, in the metadata of the PLOG j, "S0: Addr= / S1: Addr= / S2: Addr=" indicates that the PLOG j corresponds to the storage nodes S0, S1, and S2, and an address (Addr) corresponding to the PLOG j in each of the storage nodes S0, S1, and S2 is not determined yet, and therefore is empty.

Then, the switch St0 sends a storage space allocation request to the corresponding storage nodes based on the storage nodes corresponding to the PLOG j in the metadata of the PLOG j, where the storage space allocation request includes the volume of the PLOG j. For example, the volume of the PLOG j is 2 megabytes (M). Therefore, the storage space allocation request is used to request to allocate a storage space of 2M in the storage nodes. When writing a plurality of copies of data, for example, the storage nodes S0, S1, and S2 are specified in the information of the PLOG j sent by the computing node C0 to the switch St0, the switch St0 sends the storage space allocation request to the storage nodes S0, S1, and S2. FIG. 3 shows only one storage node for illustration. It may be understood that for multi-copy write, the plurality of corresponding storage nodes perform the operations the same as those performed by the storage node in FIG. 3.

Step S305. The storage node allocates a storage space according to the storage space allocation request, and returns storage space information.

As described above, for multi-copy storage, after receiving the storage space allocation request, the storage nodes S0, S1, and S2 respectively allocate local storage spaces to the PLOG j, and return storage space information to the switch St0. Only operations by the storage node S0 are described herein as an example. After receiving the storage space allocation request, the storage node S0 obtains an unused contiguous storage space of 2M from a local storage medium (for example, an SCM), marks the storage space as allocated, and returns address information (for example, a start address or an address range) of the storage space to the switch St0.

Step S306. The switch records a relationship between the PLOG j and the storage space information.

Specifically, after receiving the information of the storage space, for example, the start address of the storage space, from each storage node corresponding to the PLOG j, the switch St0 records the information in the metadata of the PLOG j. Specifically, the switch St0 may record, in corresponding "Addr" fields in Table 1, start addresses of storage spaces allocated to the PLOG j in the storage nodes S0, S1, and S2.

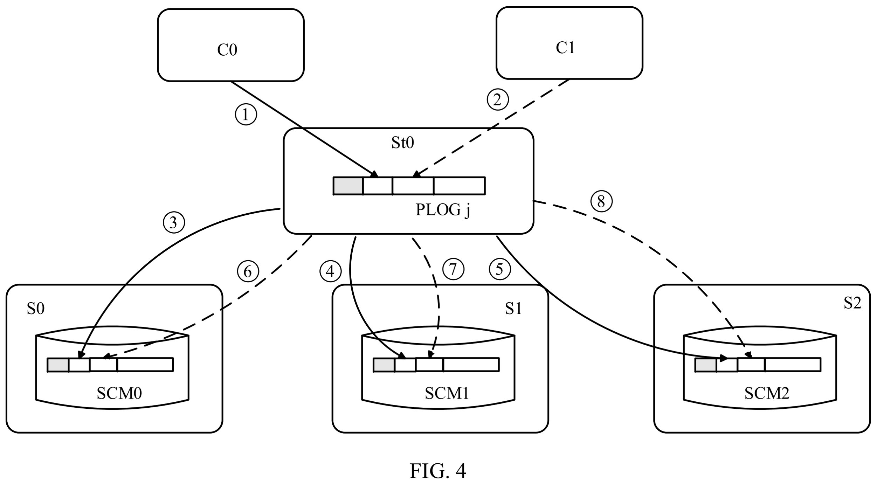

After the foregoing steps are completed, the process of creating the PLOG j is completed. After the creation process is completed, the switch may notify each computing node of the newly generated PLOG j, so that each computing node may write data to the PLOG j in parallel. FIG. 4 is a schematic diagram of a process in which the computing nodes C0 and C1 perform writing on the PLOG j in parallel. To distinguish writing by the computing nodes C0 and C1, operations related to the computing node C0 are represented by solid lines, and operations related to the computing node C1 are represented by dashed lines in FIG. 4. In addition, as described above, the metadata of the PLOG j is stored in the switch St0, and the PLOG j is represented by a data bar in FIG. 4. In addition, a segment of a storage space is allocated to the PLOG j in SCM0, SCM1, and SCM2 of the storage nodes S0, S1, and S2 corresponding to the PLOG j. The storage space is also represented by a data bar. The steps in FIG. 3 are described below with reference to FIG. 4.

In addition, when an application in the computing node is used for the first time, the computing node allocates an initial PLOG to the application, and allocates a storage space to the initial PLOG. A process of allocating the storage space to the initial PLOG is the same as the process of allocating the storage space to the PLOG j. For details, refer to descriptions of steps S303 to S306. Details are not described herein again.

Step S307. The computing node sends a write request 1' for the PLOG j to the switch.

As described above, after obtaining the newly generated PLOG j, the application in the computing node C0 may re-initiate the write request 1' for the PLOG j, to write the to-be-written data that is not successfully written. The write request 1' is used to distinguish from the write request 1 for the PLOG i. Similarly, the write request 1' includes the identifier of the PLOG j and the to-be-written data.

Step S308. The switch allocates an address space 1' to the write request 1' in the PLOG j.

When the address space 1' is allocated to the write request by the switch, concurrency control may be performed on write requests from the plurality of computing nodes. For details, refer to FIG. 4. It is assumed that the computing node C0 sends the write request 1' for the PLOG j to the computing node St0 in operation ①. The computing node C1 sends a write request 1" for the PLOG j to the switch St0 in operation ②. According to a process mechanism, the switch St0 sequentially processes the write requests based on a sequence of receiving the write requests. It is assumed that the switch St0 first receives the write request 1'. Therefore, the switch St0 may first allocate the address space 1' for the write request 1' in the PLOG j, where the address space 1' can also be represented as an address 1'. Usually, the address space is represented by a result obtained by adding a start address and a length of the address space. Therefore, when the switch St0 allocates the address space 1' to the write request 1', a start address offset1 in the unallocated address space in the PLOG j is first obtained from the metadata of the PlOG j, and the offset1 is used as a start address of the write request 1'. In this way, the address space 1' allocated to the write request 1' is an address space whose start address is the offset1 and whose length is a length of the to-be-written data. After allocating the address space 1' to the write request 1', the switch St0 updates an offset of the PLOG j in the metadata to a result obtained by adding the offset1 and the length of the to-be-written data. For example, it is assumed that before the address is allocated to the write request 1', a value of the offset is 10, that is, a 10-byte address space is allocated to another write request in the PLOG j. Therefore, a start address in a current unallocated address space of the PLOG j is 10. It is assumed that the length of the to-be-written data of the write request 1' is 10 bytes. In this case, the write address space allocated by the switch St0 to the write request 1' is 10 to 19. Then the switch St0 updates the value of the variable offset in the metadata of the PLOG j to 10+10=20, that is, the start address of the unallocated address space in the current PLOG j is 20. When St0 allocates a write address space to the write request 1" after processing the write request 1', the address space 20 is used as a start address for allocating an address space to the write request 1".

In this embodiment of this application, the switch allocates a write address space to each write request based on a sequence of receiving write requests, to implement mutual exclusion of write address spaces allocated to the write requests. In this way, for concurrent write requests of different computing nodes, a mutex does not need to be set. In this way, concurrency control can be performed on access by different computing nodes to a same PLOG, thereby achieving higher processing efficiency.

Step S309. The switch determines an address space 2' corresponding to the address space 1' in the storage node.

In an implementation, the switch may calculate, based on the start address offset1 of the address space 1' and the start address of the storage space in the storage node corresponding to the PLOG j, a start address of the address space 2' corresponding to the address space 1' in the storage node. In addition, it can be determined that the address space 2' is of the length of the to-be-written data of the write request 1'. For multi-copy write, the switch St0 may determine address spaces 2' corresponding to address space 1' in the storage nodes S0, S1, and S2. For example, it is assumed that the start address of the storage space corresponding to the PLOG j in the storage node S0 is 100. As described above, the start address of the address space 1' is 10. In this case, the start address of the address space 2' is 100+10=110. Similarly, the switch St0 may calculate start addresses of the address spaces 2' corresponding to the address space 1' in the storage nodes S1 and S2.

It may be understood that, in the foregoing implementation, the address space 2' is determined by determining the start address and the address space length of the address space 2'. This embodiment of this application is not limited thereto. Another manner in which the address space 2' can be determined also falls within the protection scope provided in this embodiment of the present invention.

Step S310. The switch sends a write request 2' for the address space 2' to the storage node.

After determining the start address of the address space 2' corresponding to the address space 1' in the corresponding storage node, the switch generates the write request 2' used for writing to the corresponding storage node, where the write request 2' includes information (for example, the start address) of the address space 2' and the to-be-written data in the write request 1'. Refer to FIG. 4. Specifically, the switch St0 generates the write requests 2' for the storage nodes S0, S1, and S2, and sends the write request 2' to the storage nodes S0, S1, and S2 respectively in operations ③, ④ and ⑤ in the figure. In this case, the to-be-written data in the write request 1' is written to the address spaces 2' of respective storage spaces (the data bars in FIG. 4) of the SCM0, the SCM1, and the SCM2. In RDMA connection, the switch St0 maintains connection information by establishing a QP queue corresponding to the computing node and three QP queues corresponding to the storage nodes S0, S1, and S2 respectively, to implement reliable one-to-three multicast communication. The switch St0 generates three copies of the to-be-written data of the write request 1', and generates three write requests 2' based on the three pieces of data. Therefore, the computing node C0 only needs to send one write request to the switch St0, and then writing to the three storage nodes can be achieved. Compared with that in a manner in which the computing node generates one write request for each storage node in the related technology, a quantity of write requests sent from the computing node C0 is greatly reduced, thereby reducing a data transmission amount of the computing node C0.

It can be learned from steps S308 to S310 that, because the switch stores the metadata of the PlOG j, the computing node only needs to send the write request 1' to the switch St0. The switch St0 allocates the address space 1' to the write request 1' based on the metadata of the PlOG j. After allocating the address space 1' to the PlOG j, the switch St0 does not need to return the allocated address to the computing node C0. Therefore, load of the computing node C0 is effectively reduced, and a latency in writing data is reduced. As a result, processing efficiency of the computer system is improved.

After sending the write request 2' corresponding to the write request 1', the switch St0 may record the write request 1' in a local write request queue corresponding to the PLOG j. As a result, after the data is written to the storage node, the write request can be returned according to a sequence of receiving write requests. A specific return manner is explained in the following descriptions.

After step S310 is performed, the switch St0 may start to process the write request 1", that is, to allocate an address space 1" in the PLOG j to the write request 1", determine a start address of an address space 2" corresponding to the address space 1" in the storage node, and send a write request 2" for the address space 2" to the storage node. As shown in operations ⑥, ⑦ and ⑧ in FIG. 4, the switch St0 may send the write request 2" to the storage nodes S0, S1, and S2. In this way, the to-be-written data in the write request 1" is written to each storage node. For example, in the storage node S0, after operation ⑥ is performed, writing to the address space 2" may be performed in parallel with writing to the address space 2', instead of being performed after writing to the address space 2' is completed. Similarly, after the write request 2" corresponding to the write request 1" is sent, the write request 1" may be recorded in the write request queue.

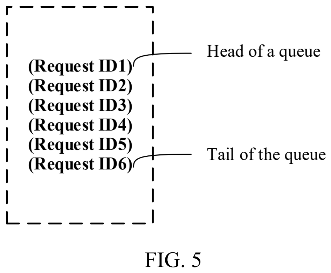

FIG. 5 is a schematic diagram of content of a write request queue corresponding to the PLOG j. As shown in FIG. 5, the write request queue records an ID (Request ID) of a write request that is for the PLOG j and that is to be completed. The switch St0 records each write request in the write request queue according to a time sequence of receiving write requests. After receiving a new write request, the switch St0 records the ID of the write request at the tail of the write request queue. After the write request is completed, for example, after receiving write completion confirmation information of the write request from the storage node, when it is determined that the ID of the write request is the head of the write request queue, the switch returns information indicating completion of the write request to the computing node that sends the write request, and removes the ID of the write request from the write request queue. For example, in the queue shown in FIG. 5, the head of the queue corresponds to the earliest received write request for the PLOG j among write requests to be completed, and the tail of the queue corresponds to the latest received write request for the PLOG j among the write requests to be completed. For example, a Request ID5 is an ID of the write request 1', and a Request ID6 is an ID of the write request 1".

It may be understood that a form of the write request queue is not limited to that shown in FIG. 5. For example, in addition to the write request ID, the queue may further include a quantity of copies of the write request. When the write request queue includes the quantity of copies of the write request, the switch may determine, based on the quantity of copies, whether each storage node corresponding to the write request returns the write request, without querying the quantity of copies. For example, the write request queue records that a quantity of copies of the write request 1' is 3. When the write request 1' is located at the head of the write request queue, and after all the three storage nodes corresponding to the write request 1' return the write request, the switch St0 may return information indicating completion of the write request 1' to the computing node C0. In another implementation, the write request queue may include an offset address of each write request. The offset address is a start address of an address space allocated to each write request in the PLOG j. As described above, a volume of an offset address allocated to a write request relates to a time at which the write request arrives at the switch. The earlier a write request arrives at the switch, the smaller the allocated offset address is. Therefore, offset addresses allocated to the write requests may be arranged in the write request queue in ascending order, and each offset address corresponds to one write request. For example, after receiving a new write request, the switch St0 records an offset address of the write request at the tail of the write request queue. After the switch St0 receives write request completion confirmation information from a storage node corresponding to the write request, in a case in which it is determined that the offset address of the write request is at the head of the write request queue, the switch returns information indicating completion of the write request to a computing node sending the write request, and removes the offset address of the write request from the write request queue.

Step S311. The storage node writes the to-be-written data to the address space 2' in the storage node.

After receiving the write request 2', in response to the write request 2', the storage node writes the to-be-written data to the address space 2' in the storage space corresponding to the PLOG j. Refer to FIG. 4. In the storage nodes S0, S1, and S2, the to-be-written data is written to the address spaces 2' in the corresponding storage spaces in SCM0, SCM1, and SCM2.

Step S312. The storage node returns information indicating completion of the write request 2' to the switch.

After writing the to-be-written data in the write request 1' to the address spaces 2' in the storage spaces of the storage nodes S0, S1, and S2, the storage nodes S0, S1, and S2 respectively return information indicating completion of the write request 2' to the switch St0.

Step S313. The switch determines that all write requests that are for the PLOG j and received before the write request 1' are completed.

When the switch St0 receives the information indicating completion of the write request 2' from the storage nodes S0, S1, and S2, it indicates that the to-be-written data in the write request 1' is written to the three storage nodes corresponding to the PLOG j. When order-preserving writing of the write requests for the PLOG j in the address spaces of the PLOG j is implemented, a hole in the storage spaces of the storage nodes corresponding to the PLOG j can be prevented. In this embodiment of the present invention, the write request is returned to the computing node according to the sequence in which the switch receives the write requests for the PLOG j. In this way, order-preserving writing of the write requests in the address spaces of the PLOG j is implemented. Because the switch St0 allocates, according to the sequence of receiving the write requests, the address space in the PLOG j to each write request for the PLOG j, an address in an address space allocated to a write request received earlier is smaller. The write requests are returned to the computing node according to the sequence of receiving the write requests, in other words, the write requests are returned according to ascending order of write addresses of the write requests. In this way, order-preserving writing in the address spaces of the PLOG j is implemented, and a hole in the storage spaces corresponding to the PLOG j in the storage nodes is prevented.

In this embodiment of this application, it may be determined, based on the write request queue shown in FIG. 5, that all write requests that are for the PLOG j and received before the write request 1' are completed. For example, the ID of the write request 1' is the Request ID5, and when Request ID5 becomes the head of the write request queue, it indicates that the write request 1' is the earliest received write request in the write request queue. Therefore, it may be determined that all write requests received before the write request 1' are completed. After receiving the information indicating completion of the write request 2' from the storage nodes S0, S1, and S2, if the switch St0 determines that the Request ID5 is not at the head of the write request queue, the switch St0 keeps waiting until the Request ID5 becomes the head of the write request queue, and then determines that all the write requests that are for the PLOG j and received before the write request 1' are completed. It may be understood that, in this embodiment of this application, it is not limited to determining, based on the write request queue, that all the write requests that are for the PLOG j and received before the write request 1' are completed, other manners in which it can be determined that all the write requests that are for the PLOG j and received before the write request 1' are completed also fall within the protection scope provided in this embodiment of the present invention.

S14. The switch returns related information of the write request 1' to the computing node.

After determining that all the write requests that are for the PLOG j and received before the write request 1' are completed, the switch St0 returns the related information of the write request 1' to the computing node C0, where the related information includes information indicating completion of the write request 1', and a write address allocated to the write request 1' in the PLOG j. After the related information of the write request 1' is returned to the computing node, the switch St0 deletes the ID of the write request 1' from the write request queue.

Specifically, in an implementation, after determining that all the write requests before the write request 1' are completed, the switch St0 returns the confirmation information to the computing node C0, where the confirmation information indicates that the write request 1' is completed. After receiving the confirmation information, the computing node C0 sends a read request for reading the related information of the write request 1' to the switch St0. After receiving the read request, the switch St0 returns the completion information and the write address of the write request 1' to the computing node C0. In another implementation, after determining that all the write requests before the write request 1' are completed, the switch St0 may directly return the completion information and the write address of the write request 1' to the computing node C0.

After obtaining the information indicating completion of the write request 1', the application in the computing node C0 records the write address of the write request 1' (namely, PLOG j, address space 1') in a service that generates the write request 1', to facilitate a subsequent service to read the data written to the write address. When the application in the computing node C0 needs to read the data written by using the write request 1', the application may send the read request for the address space 1' of the PLOG j to the switch St0. The switch St0 may read, based on the metadata of the PLOG j, the data from the address space 2' corresponding to the address space 1' in any of the storage nodes S0, S1, and S2, and return the data to the computing node C0.

FIG. 6 is a flowchart of a process B performed when the remaining space of the PLOG i is sufficient, where the process B includes a process of writing to the PLOG i.

Step S601. After determining, in step S202 in FIG. 2, that the remaining space of the PLOG i is sufficient, the switch may determine that the to-be-written data in the write request 1 can be written to the PLOG i. Therefore, the switch allocates the address space 1 in the PLOG i to the write request 1. Step S602. The switch determines, based on the metadata of the PLOG i, an address space 2 corresponding to the address space 1 in the storage node. Similarly, the storage node is at least one storage node corresponding to the PLOG i. Step S603. The switch sends a write request 2 for the storage space 2 to the storage node. Step S604. The storage node performs writing on the storage space 2. Step S605. The storage node returns information indicating completion of the write request 2. Step S606. The switch determines that all write requests that are for the PLOG i and received before the write request 1 are completed. Step S607. The switch returns related information of the write request 1 to the computing node. A manner of writing the data in the write request 1 to the PLOG i in steps S601 to S607 is the same as the manner of writing the data in the write request 1' to the PLOG j in FIG. 3. For details, refer to the foregoing descriptions of steps S308 to S314. Details are not described herein again.

Similarly, after obtaining the information indicating completion of the write request 1, the application in the computing node records the write address of the write request 1 (namely, PLOG i, address space 1) in a service that generates the write request 1, to facilitate a subsequent service to read the data written to the write address.

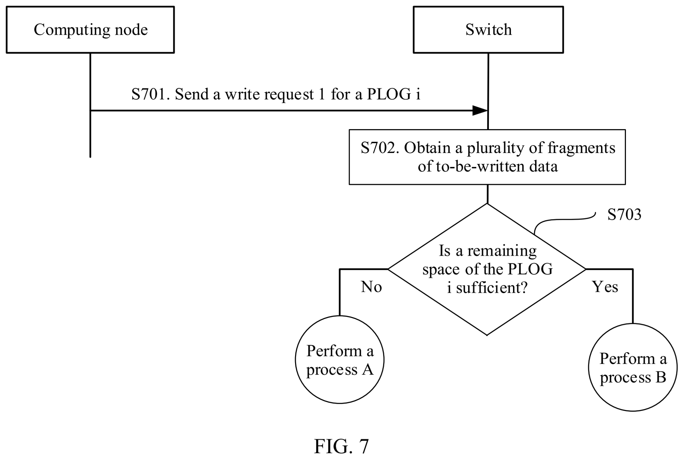

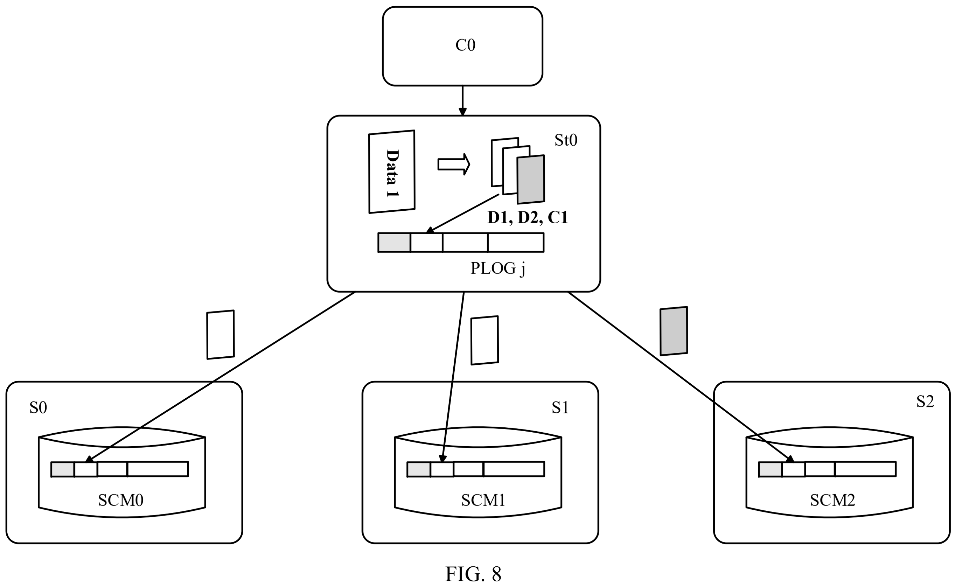

The foregoing describes the method for writing data provided in embodiments of this application mainly by using the example in which data reliability is ensured by multi-copy storage. Embodiments of this application may be further applied to a scenario in which data reliability is ensured by storing data as fragments, for example, by using a redundant array of independent disks (Redundant Array of Independent Disks, RAID) algorithm and erasure coding (Erasure Coding, EC) to ensure the reliability of written data. Details are shown in a flowchart of FIG. 7 and a schematic diagram of FIG. 8.

As shown in FIG. 7, first, in step S701, a computing node sends a write request 1 for a PLOG i to a switch, where the write request 1 is used to write data 1.

For example, the write request 1 includes an identifier of the PLOG i and the to-be-written data 1.

Step S702. After receiving the write request 1, the switch obtains a plurality of fragments of the to-be-written data of the write request 1.

After receiving the write request 1, the switch may divide the to-be-written data 1 in the write request 1 into the plurality of data fragments according to a preset EC algorithm or a RAID algorithm, and calculate parity fragments of the plurality of data fragments. Alternatively, before sending the write request 1, the computing node may divide the data 1 into the plurality of data fragments, and calculate the parity fragments of the plurality of data fragments, where the data fragments and the parity fragments of the data 1 are included in the sent write request 1. Therefore, the switch may directly obtain the plurality of data fragments and the parity fragments of the data 1 from the write request 1. Refer to FIG. 8. The switch may evenly divide the data 1 into two data fragments D1 and D2 of a same size (shown by small white rectangles in FIG. 8), and calculate, based on the EC algorithm or the RAID algorithm, a parity fragment C1 (shown by a small gray rectangle in FIG. 8) of the two data fragments. Then three fragments D1, D2, and C1 of the data 1 are obtained, where data lengths of the three fragments are the same. The three fragments of the data 1 include two data fragments and one parity fragment. Therefore, after the three fragments are stored in three storage nodes respectively, one of the three storage nodes is allowed to become abnormal. Specifically, the data 1 may be directly obtained by combining D1 and D2, and if an exception occurs in a storage node that stores D1, the data 1 may be restored by combining D2 and C1 based on the EC algorithm or the RAID algorithm.

Step S703. The switch determines whether a remaining space of the PLOG i is sufficient.

In this embodiment, each fragment of the data 1 is stored in the storage node rather than the data 1. Therefore, in this step, it is determined whether the remaining space of the PLOG i is sufficient to store one fragment of the data 1. If the space is insufficient, the process A shown in FIG. 3 is performed. If the space is sufficient, the process B shown in FIG. 6 is performed.

A difference between the methods shown in FIG. 2 and FIG. 8 is that if the process A is performed in the method, when the switch St0 allocates an address in a PLOG j for a write quest 1', the address (an address space 1') is allocated based on a size of each fragment. In addition, for storing data in each storage node, each fragment is stored in an address space 2' corresponding to the address space 1' in each storage node, and a method of storing the data 1 in the address space 2' is not used. Compared with multi-copy storage, using this method to store the data 1 in the storage system reduces an amount of data to be stored and saves resources of storage media.

Similarly, after the fragments of the data 1 are written to the storage nodes, the switch St0 returns information indicating completion of the write request 1' and the write address to the computing node C0. In this case, after obtaining the information indicating completion of the write request 1', an application in the computing node C0 records the write address of the write request 1' (namely, PLOG j, address space 1') in a service that generates the write request 1', to facilitate a subsequent service to read the data written to the write address.

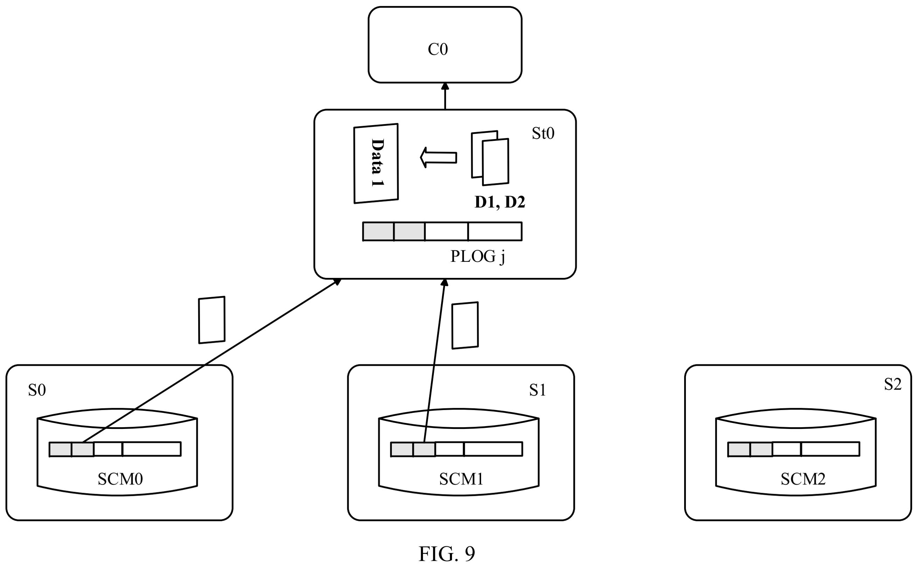

FIG. 9 is a schematic diagram of a process of reading data in a computer system in the case of fragment-based storage. Refer to FIG. 9. When the application in the computing node C0 expects to read the stored data 1, the computing node may send a read request for the address space 1' of the PLOG j to the switch St0. The switch St0 may read the data fragments D1 and D2 of the data 1 from the address spaces 2' corresponding to the address space 1' in the storage nodes S0 and S1, obtain the data 1 by combining the data fragments D1 and D2, and return the data 1 to the computing node C0.

Metadata of a storage space of the service is stored on an intermediate device, so that the intermediate device manages the storage space of the service based on the metadata. In this way, when writing data, the computing node only needs to send a write request to the intermediate device. The intermediate device allocates an address in the storage space for the write request based on the metadata, and writes data to a storage device according to the allocated address. Because the computing node only needs to send the request to the intermediate device, load of the computing node and a latency in writing data are reduced.

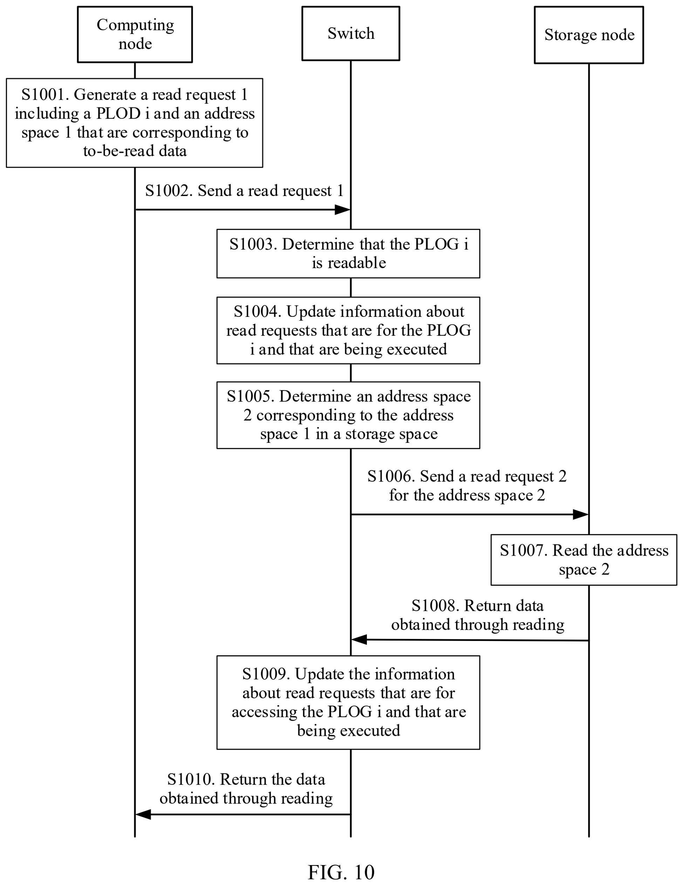

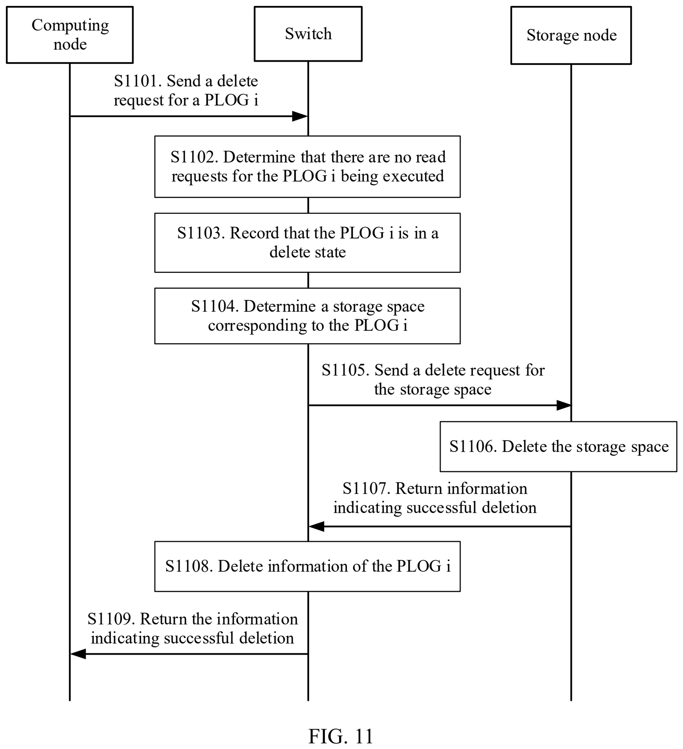

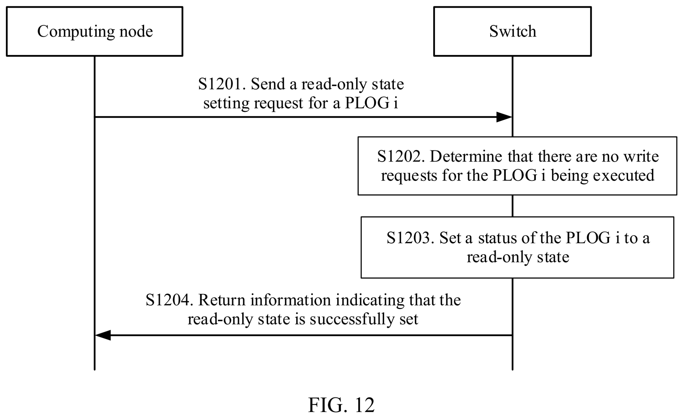

In embodiments of this application, in addition to running, by using the switch, the control logic of concurrent write, another PLOG control flow can also be run by using the switch. The following describes a control flow for avoiding a concurrency conflict between a read request and a delete request with reference to FIG. 10 and FIG. 11, and a control flow for avoiding a concurrency conflict between a write request and a read-only state setting request with reference to FIG. 12.

FIG. 10 is a flowchart of a method for reading data in a computer system according to an embodiment of this application. In this method, a concurrency conflict between a read request and a delete request can be avoided.

As shown in FIG. 10, in step S1001, a computing node generates a read request 1, where the read request 1 includes a PLOG i and an address space 1 that are corresponding to to-be-read data.

Refer to FIG. 1. For example, the computing node C0 may receive the write request 1 for writing data (namely, data 1) from the user terminal, and then the computing node C0 may generate the read request 1 in response to the request of the user terminal. Specifically, the computing node C0 may generate the read request 1 based on a pre-recorded write address of the write request 1, where the read request 1 includes the PLOD i and the address space 1, and the address space 1 includes, for example, a start address of the address space 1 and a length of the address space 1.

Step S1002. The computing node sends the read request 1 to the switch.

As described above, for example, the PLOG i corresponds to the switch St0. Therefore, the computing node C0 sends the read request 1 to the switch St0.

Step S1003. The switch determines that the PLOG i is readable.

According to the foregoing descriptions of Table 1, the switch St0 records metadata of each corresponding PLOG. The metadata includes a status of the PLOG, and the status includes, for example, a readable and writable state, a read-only state, and a delete state. In other words, the switch St0 may query the status of the PLOG i in the locally recorded metadata of the PLOG i, to determine whether the PLOG i is readable. If the status of the PLOG i is the readable and writable state or the read-only state, the PLOG i is readable, and subsequent steps S1004 to S1010 in FIG. 10 may be implemented. If the state of the PLOG i is the delete state, the PLOG i is unreadable. In this case, the switch St0 blocks the read request 1, or returns information that the PLOG i is in the delete state to the computing node C0.

Step S1004. The switch updates, based on the read request 1, information about read requests that are for the PLOG i and that are being executed.

The switch records the information about read requests that are for the PLOG i and that are being executed. When receiving a read request and completing a read request, the switch updates the information about read requests that are for the PLOG i and that are being executed. Because the switch records the information about read requests that are for the PLOG i and that are being executed, if the switch does not complete processing a read request for the PLOG i while the switch receives a delete request for the PLOG i sent by another computing node, the switch may block the delete request based on the information about read requests that are for the PLOG i and that are being executed.

Specifically, the information about read requests that are for the PLOG i and that are being executed is a quantity of read requests that are for the PLOG i and that are being executed by the switch, and the information is represented by a variable a. After receiving the read request 1, the switch adds 1 to a value of the variable a. When a read request is completed, the value of variable a is decreased by 1.

Step S1005. The switch determines an address space 2 corresponding to the address space 1 in the storage node. For this step, refer to the foregoing descriptions of step S309. Details are not described herein again.

Step S1006. The switch sends a read request 2 for the address space 2 to the storage node. The read request 2 includes information about the address space 2, for example, includes a start address of the address space 2 and a length of the address space 2.

Step S1007. After receiving the read request 2, the storage node reads the address space 2 according to the read request 2.

Step S1008. The storage node returns data obtained through reading (namely, the foregoing data 1) to the switch.

Step S1009. The switch updates the information about read requests that are for the PLOG i and that are being executed.

After receiving the read request 2 returned from the storage node, the switch St0 indicates that the read operation on the address space 2 in the storage node is completed, and updates the information about read requests that are for the PLOG i and that are being executed, in other words, subtraction is performed by the switch St0 to subtract 1 from the value of the variable a.

Step S1010. The switch returns the data obtained through reading to the computing node.

The switch St0 may return the data 1 obtained through reading to the computing node C0, and the computing node C0 may return the data 1 to the user terminal.

FIG. 11 is a flowchart of a method for deleting data in a computer system according to an embodiment of this application. In this method, a concurrency conflict between a read request and a delete request can be avoided.

As shown in FIG.11, in step S1101, a computing node sends a delete request for a PLOG i to a switch.

In an implementation, a plurality of upper-layer applications run in a computing node C0, and each application applies for a PLOG to store data generated in the application. In other words, in this case, the PLOG corresponds to only one application. Life cycles of PLOGs of the applications are different due to settings in the applications and types of data recorded in the PLOGs. For example, the PLOG i records a browsing history of a user, and it is set in the application that the browsing history is kept for one week. In other words, a life cycle of the PLOG i is one week, and the PLOG i is deleted in one week. Therefore, in the computing node C0, after the life cycle of the PLOG i ends, the computing node C0 may send a delete request for the PLOG i to the switch St0.

In addition, the computing node may also generate a delete request for the PLOG i according to a deletion operation of the user.

Step S1102. After receiving the delete request for the PLOG i, the switch determines that there are no read requests for the PLOG i being executed.

After receiving the delete request for the PLOG i, the switch St0 needs to determine whether there is a read request for the PLOG i being executed. If there is a read request for the PLOG i being executed, execution of the delete request is suspended. For example, when the execution of the delete request is suspended, whether there is a read request being executed is determined thorough polling, in other words, polling is performed to read a value of the variable a to determine whether the value of the variable a becomes 0, until it is determined that the value of the variable a is 0 (that is, it is determined that there are no read requests being executed). Then subsequent steps in FIG. 11 are performed. In this way, a conflict between a delete request and a read request that is being executed can be avoided.

Step S1103. The switch records that the PLOG i is in a delete state.

After determining that there are no read requests for the PLOG i being executed, the switch St0 may record that, in the metadata of the PLOG i shown in Table 1, a status of the PLOG i is the delete (Delete) state, to block a subsequent read request for the PLOG i as described above.

Step S1104. The switch determines a storage space corresponding to the PLOG i.

The switch St0 may determine, based on the metadata of the PLOG i, a storage node corresponding to the PLOG i and a storage space corresponding to the PLOG i in each storage node. Specifically, a start address of the storage space corresponding to the PLOG i in each storage node and a volume of the storage space may be determined, to determine the storage space corresponding to the PLOG i in each storage node.

Step S1105. The switch sends a delete request for the storage space to the storage node.

The switch St0 sends a delete request, to storage nodes S0, S1, and S2 corresponding to the PLOG i, for the storage space corresponding to the PLOG i. For example, the delete request includes the start address and the volume of each corresponding storage space in the storage nodes S0, S1, and S2.

Step S1106. The storage node deletes the storage space.

After receiving the deletion request, the storage nodes S0, S1, and S2 delete respective storage spaces. For example, in the storage node S0, the storage space is determined based on the start address and the volume of the storage space in the delete request. Data stored in the storage space is deleted, and a record indicating that the storage space is allocated is canceled, so that the storage space can be reallocated to another PLOG.

Step S1107. The storage node returns information indicating successful deletion.

After the storage spaces are deleted, the storage nodes S0, S1, and S2 respectively return the information indicating successful deletion to the switch St0.

Step S1108. The switch deletes information of the PLOG i.

After determining, based on information that is about the storage nodes corresponding to the PLOG i and that is recorded in the metadata of the PLOG i, that the storage nodes S0, S1, and S2 all return the information indicating successful deletion, the switch St0 may delete the record of the metadata of the PLOG i in Table 1. In this way, the PLOG i is deleted.

Step S1109. The switch returns the information indicating successful deletion to the computing node.

After deleting the metadata of the PLOG i, the switch St0 returns the information indicating successful deletion to the computing node C0, so that the computing node C0 can delete the stored information related to the PLOG i.

In this way, after receiving the delete request for the PLOG i sent by the computing node, when no conflicts occur in the PlOG i, for example, when there are no read requests for the PLOG i, the intermediate device sets the status of the PLOG i to the delete state and indicates the storage node to delete a physical storage space corresponding to the logical storage space.

FIG. 12 is a flowchart of a method for setting data to read-only in a computer system according to an embodiment of this application. According to this method, a concurrency conflict between a read-only state setting request and a write request can be avoided.

As shown in FIG.12, first, in step S1201, a computing node sends a read-only state setting request for a PLOG i to a switch.

For example, when a write operation is performed on the PLOG i as shown in FIG. 6, it is assumed that after the switch St0 sends the write request 2 for the address space 2 in step S603, the switch St0 does not receive the information indicating completion of the write request 2 from the storage node due to reasons such as an exception of the storage node. Therefore, information indicating completion of the write request 1 is not returned to the computing node C0. In this case, if computing node C0 does not receive, within a preset period of time, the information indicating completion of the write request 1, the computing node C0 can determine that execution of the write request 1 fails, and send a read-only state setting request for the PLOG i to the switch St0.

Step S1202. The switch determines that there are no write requests for the PLOG i being executed.

After receiving the read-only state setting request for the PLOG i, the switch St0 needs to first determine whether a write request for the PLOG i is being executed currently. If the write request exists, the read-only state setting request conflicts with the write request, and the switch St0 suspends execution of the read-only state setting request. In addition, after determining that there is a write request for the PLOG i being executed, the switch St0 may perform polling to determine whether there is a write request being executed, and execute the read-only state setting request after determining that there are no write requests for the PLOG i being executed.

To be specific, similarly, every time the switch St0 starts to execute a write request for the PLOG i (for example, the write request 1 in FIG. 6) sent by the computing node, the switch St0 may update, based on the write request 1, information about write requests that are for the PLOG i and that are being executed. For example, the information about write requests that are for the PLOG i and that are being executed is a quantity of write requests that are for the PLOG i and that are being executed by the switch, and the information is represented by a variable b. After receiving the write request 1, the switch adds 1 to a value of the variable b. When a write request is completed, the value of variable b is decreased by 1. Therefore, the switch St0 may determine, based on the value of the variable b, whether there is a write request for the PLOG i being executed currently. If the value of the variable b is 0, it can be determined that there are no write requests for the PLOG i being executed currently.

Step S1203. The switch sets the status of the PLOG i to a read-only state.

After determining that there are no write requests for the PLOG i currently being executed, the switch St0 sets the status of the PLOG i to the read-only state in metadata of the PLOG i. Therefore, when subsequently receiving a write request for the PLOG i, the switch St0 may block the write request based on the read-only state of the PLOG i.

Step S1204. The switch returns, to the computing node, information indicating that the read-only state is successfully set.

In this way, after receiving the read-only state setting request for the PLOG i sent by the computing node, the intermediate device sets the status of the PLOG i to the read-only state when no conflicts occur in the PlOG i, for example, when there are no write requests for the PLOG i.

According to the foregoing descriptions of the methods shown in FIG. 10 to FIG. 12, the switch may provide same PLOG information for all computing nodes by maintaining PLOG status information and IO information, and may perform concurrency logic control based on the same information.

In embodiments of this application, control logics run by a computing node and a storage node are offloaded to a programmable intermediate device serving as a convergence point in a network. In a process of writing data, the computing node only needs to communicate with a switch once to write data to the storage node. In this way, a quantity of times of communication between the computing node and the switch, a load on the computing node, and a latency in writing data are reduced, and access efficiency is improved.

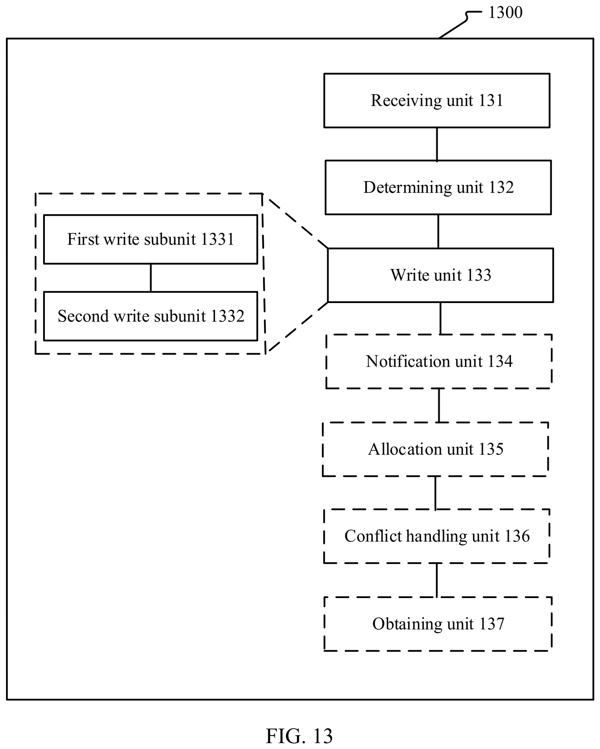

FIG. 13 is a schematic diagram of a structure of a data processing apparatus 1300 according to an embodiment of this application. The apparatus 1300 is deployed in an intermediate device. The intermediate device is connected to a computing node and a storage node. A service runs in the computing node. The storage node stores data of the service. The apparatus is configured to perform the foregoing data processing methods in FIG. 2 to FIG. 12. The apparatus 1300 includes:
a receiving unit 131, configured to receive a first write request that is for the data of the service and that is sent by the computing node;
a determining unit 132, configured to determine to write to-be-written data that is in the first write request to a first address of the storage node; and
a write unit 133, configured to request the storage node to write the to-be-written data to the first address.

In an implementation, the first write request is for a logical storage space corresponding to the data of the service, the intermediate device stores metadata of the logical storage space, the metadata of the logical storage space includes an identifier of the logical storage space, address information of the logical storage space, and address information of a physical storage space corresponding to the logical storage space, the physical storage space belongs to a space in the storage node, and the first address is an address in the physical storage space.

In an implementation, the determining unit 132 is further configured to: allocate a second address in the logical storage space to the first write request; and determine, based on the metadata of the logical storage space, the first address to which the to-be-written data is written in the physical storage space corresponding to the logical storage space.

In an implementation, the receiving unit 131 is further configured to receive a notification message that is sent by the storage node and that is used to notify that writing of the to-be-written data is completed; and the apparatus 1300 further includes a notification unit 134, configured to: when it is determined that other write requests that are for the logical storage space and received before the first write request are completed, notify the computing node that the first write request is completed.

In an implementation, the apparatus 1300 further includes an allocation unit 135, configured to request, based on information that is about the logical storage space and that is received from the computing node, the storage node to allocate a physical storage space to the logical storage space.

In an implementation, the determining unit 132 is configured to allocate the second address to the first write request among unallocated spaces of the logical storage space according to an ascending order of addresses.

In an implementation, the storage node includes a first storage node and a second storage node, and the second address corresponds to a first address that is in the first storage node and to which the to-be-written data is written and a first address that is in the second storage node and to which the to-be-written data is written; and the write unit 133 includes: a first write subunit 1331, configured to request the first storage node to write the to-be-written data to the first address that is in the first storage node and to which the to-be-written data is written; and a second write subunit 1332, configured to request the second storage node to write the to-be-written data to the first address that is in the second storage node and to which the to-be-written data is written.

In an implementation, the apparatus 1300 further includes a conflict handling unit 136, configured to: after receiving a read-only state setting request for the storage space from the computing node, set a status of the storage space to a read-only state when it is determined that no conflicts occur in the logical storage space.

In an implementation, the apparatus 1300 further includes a conflict handling unit 136, configured to: after receiving a delete request for the storage space from the computing node, when it is determined that no conflicts occur in the logical storage space, set a status of the logical storage space to a delete state and request the storage node to delete the physical storage space corresponding to the logical storage space.

In an implementation, the apparatus 1300 further includes: an obtaining unit 137, configured to obtain N fragments of the to-be-written data in the first write request after receiving the first write request sent by the computing node; and the write unit 133 is configured to request N storage nodes to write the N fragments to first addresses of the N storage nodes.

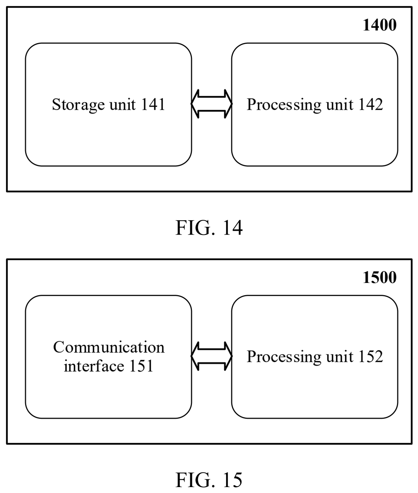

FIG. 14 is a schematic diagram of a structure of an intermediate device 1400 according to an embodiment of this application. As shown in FIG. 14, the intermediate device 1400 includes a storage unit 141 and a processing unit 142. The storage unit 141 stores executable code. When executing the executable code, the processing unit 142 implements the foregoing data processing methods in FIG. 2 to FIG. 12.

FIG. 15 is a schematic diagram of a structure of an intermediate device 1500 according to an embodiment of this application. As shown in FIG. 15, the intermediate device 1500 includes: a communication interface 151, configured to transmit data between a storage node and a computing node; and a processing unit 152, configured to process data received by the communication interface, to perform the foregoing data processing methods in FIG. 2 to FIG. 12.

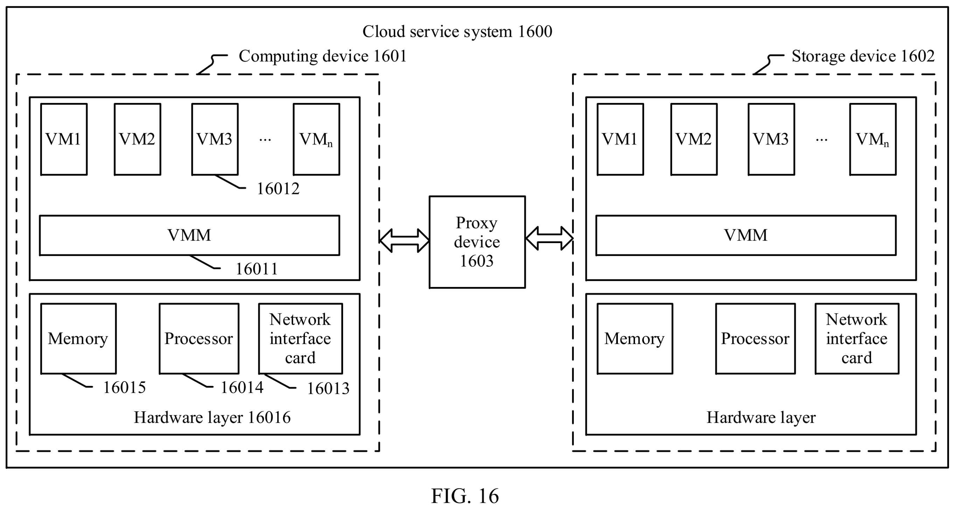

It may be understood that the computing node and the storage node described above may be physical servers, or may be cloud servers (for example, virtual servers). FIG. 16 is a schematic diagram of a cloud service system 1600 according to an embodiment of this application. Refer to FIG. 16. The system 1600 includes a computing device 1601, a storage device 1602, and an intermediate device 1603. The computing device 1601 includes a hardware layer 16016, a virtual machine monitor (VMM) 16011 running above the hardware layer 16016, and a plurality of virtual machines (VMᵢ) 16012. Any one of the virtual machines 16012 may be used as a virtual computing node of the cloud service system 1600. Similar to the computing device 1601, the storage device 1602 includes a hardware layer, a virtual machine monitor (VMM) running above a hardware layer, and a plurality of virtual machines (VMⱼ). Any one of the virtual machines may be used as a virtual storage node of the cloud service system 1600. Composition of the computing device 1601 is described in detail below as an example.

Specifically, the virtual machine 16012 is a virtual computer (server) simulated on a public hardware resource by using virtual machine software. An operating system and an application may be installed on the virtual machine, and the virtual machine may access a network resource. For an application running in a virtual machine, the virtual machine works like a real computer.

The hardware layer 16016 is a hardware platform for virtual environment running, and may be abstracted from hardware resources of one or more physical hosts. The hardware layer may include various types of hardware. For example, the hardware layer 16016 includes a processor 16014 (for example, a CPU) and a memory 16015, and may further include a network interface card (namely, NIC) 16013, a high-speed/low-speed input/output (I/O, Input/Output) device, and other devices with specific processing functions. The memory 16015 may be a volatile memory (volatile memory) such as a random-access memory (random-access memory, RAM) or a dynamic random-access memory (Dynamic random-access memory, DRAM); or the memory 16015 may be a non-volatile memory (non-volatile memory) such as a read-only memory (read-only memory, ROM), a flash memory (flash memory), a hard disk drive (hard disk drive, HDD), or a solid-state drive (solid-state drive, SSD), or a storage class memory (Storage class memory, SCM); or the memory 16015 may include a combination of the foregoing types of memories. The virtual machine 16012 runs an executable program based on the VMM 16011 and a hardware resource provided by the hardware layer 16016, to implement the steps performed by the computing node in the methods of the foregoing embodiments. For brevity, details are not described herein again.

It should be understood that terms such as "first" and "second" in this specification is used to achieve simplicity in distinguishing similar concepts, and do not constitute any limitation.

A person of ordinary skill in the art should be aware that units and algorithm steps in the examples described with reference to embodiments disclosed in this specification can be implemented by electronic hardware, computer software, or a combination of computer software and electronic hardware. To clearly illustrate interchangeability of hardware and software, various illustrative components and steps have been described above generally in terms of functions. Whether the functions are implemented by hardware or software depends on particular applications and design constraints of the technical solutions. A person skilled in the art may use different methods to implement the described functions for each particular application, but it should not be considered that the implementation goes beyond the scope of the present invention.

Further embodiments of the present invention are provided in the following. It should be noted that the numbering used in the following section does not necessarily need to comply with the numbering used in the previous sections.

Embodiment 1. A computer system, comprising a computing node, a storage node, and an intermediate device, wherein the computing node accesses the storage node through the intermediate device;
a service runs in the computing node; the storage node stores data of the service; and the intermediate device is configured to store metadata of a storage space corresponding to the data of the service, and implement a data operation between the computing node and the storage node based on the metadata of the storage space.

Embodiment 2. The system according to embodimen 1, wherein the metadata of the storage space comprises metadata of a logical storage space, the metadata of the logical storage space comprises an identifier of the logical storage space, address information of the logical storage space, and address information of a physical storage space corresponding to the logical storage space; and the physical storage space belongs to a space in the storage node.

Embodiment 3. The system according to embodiment 2, wherein there are a plurality of intermediate devices between the computing node and the storage node, the computing node is further configured to designate, in the plurality of intermediate devices, a first intermediate device for the logical storage space, and the first intermediate device is configured to store the metadata of the logical storage space.

Embodiment 4. The system according to embodiment 3, wherein the computing node selects the first intermediate device from the plurality of intermediate devices based on the identifier of the logical storage space.

Embodiment 5. The system according to any one of embodiments 2 to 4, wherein the logical storage space is a persistence LOG space.

Embodiment 6. The system according to any one of embodiments 1 to 5, wherein the intermediate device is a network switch device.

Embodiment 7. The system according to any one of embodiments 2 to 6, wherein the computing node is further configured to send a write request, wherein the write request carries to-be-written data and the identifier of the logical storage space;
the intermediate device is specifically configured to allocate a first address in the logical storage space to the to-be-written data based on the identifier of the logical storage space, determine a second address in a physical storage space corresponding to the first address, and request the storage node to write the to-be-written data to the second address in the physical storage space; and
the storage node is further configured to write the to-be-written data to the second address of the physical storage space based on a request of the intermediate device.

Embodiment 8. The system according to any one of embodiments 2 to 7, wherein the computing node is further configured to send an allocation request, wherein the allocation request is used to request to perform space configuration on the logical storage space, and the allocation request carries an identifier of a first logical storage space; and
the intermediate device is further configured to request, from the storage node based on the received allocation request, the physical storage space corresponding to the logical storage space.

Embodiment 9. The system according to embodiment 7 or 8, wherein the intermediate device receives at least two write requests from the computing node, and the intermediate device is further configured to return, based on a sequence of receiving the at least two write requests, a message indicating that execution of the at least two write requests is completed.

Embodiment 10. The system according to embodiment 9, wherein the intermediate device allocates an address in the logical storage space to each write request based on the sequence of receiving the at least two write requests, or the intermediate device returns, based on the sequence of receiving the at least two write requests, to each computing node sending the write request, a message indicating completion of the write request sent by the computing node.

Embodiment 11. The system according to embodiment 7 or 8, wherein the intermediate device is further configured to: after receiving a read-only state setting request sent by the computing node for the logical storage space, set a status of the logical storage space to a read-only state when no conflicts occur in the logical storage space.

Embodiment 12. The system according to embodiment 7 or 8, wherein the intermediate device is further configured to: after receiving a delete request sent by the computing node for the logical storage space, when no conflicts occur in the logical storage space, set a status of the logical storage space to a delete state, and indicate the storage node to delete the physical storage space corresponding to the logical storage space.

Embodiment 13. A data processing method, wherein the method is performed by an intermediate device, the intermediate device is connected to a computing node and a storage node, a service runs in the computing node, the storage node stores data of the service, the intermediate device stores metadata of a storage space corresponding to the data of the service, and the method comprises:
receiving a first write request that is for the data of the service and that is sent by the computing node;
determining, based on the metadata of the storage space, to write to-be-written data that is in the first write request to a first address of the storage node; and
requesting the storage node to write the to-be-written data to the first address.

Embodiment 14. The method according to embodiment 13, wherein the metadata of the storage space comprises metadata of a logical storage space, the metadata of the logical storage space comprises an identifier of the logical storage space, address information of the logical storage space, and address information of a physical storage space corresponding to the logical storage space, the physical storage space belongs to a space in the storage node, and the first address is an address in the physical storage space.

Embodiment 15. The method according to embodiment 14, wherein the determining to write to-be-written data that is in the first write request to a first address of the storage node comprises:
allocating a second address in the logical storage space to the first write request; and
determining, based on the metadata of the logical storage space, the first address to which the to-be-written data is written in the physical storage space corresponding to the logical storage space.

Embodiment 16. The method according to embodiment 14 or 15, wherein the method further comprises:
receiving a notification message that is sent by the storage node and that is used to notify that writing of the to-be-written data is completed; and
determining whether write requests that are for the logical storage space and received before the first write request are completed, and if the write requests are completed, notifying the computing node that the first write request is completed.

Embodiment 17. The method according to any one of embodiments 14 to 16, before the first write request is received, the method further comprises:
receiving information of the logical storage space from the computing node;
sending a storage space allocation request to the storage node, wherein the storage space allocation request is used to request for allocating a physical storage space to the logical storage space; and
receiving, from the storage node, information about the physical storage space allocated by the storage node to the logical storage space.

Embodiment 18. The method according to embodiment 15, wherein the allocating a second address in the logical storage space to the first write request comprises:
allocating the second address to the first write request among unallocated spaces of the logical storage space according to an ascending order of addresses.

Embodiment 19. The method according to any one of embodiments 13 to 18, wherein the storage node comprises a first storage node and a second storage node, and the second address corresponds to a first address that is in the first storage node and to which the to-be-written data is written and a first address that is in the second storage node and to which the to-be-written data is written; and
the requesting the storage node to write the to-be-written data to the first address comprises:
requesting the first storage node to write the to-be-written data to the first address that is in the first storage node and to which the to-be-written data is written; and
requesting the second storage node to write the to-be-written data to the first address that is in the second storage node and to which the to-be-written data is written.

Embodiment 20. The method according to any one of embodiments 14 to 19, further comprising:
receiving a read-only state setting request for the logical storage space from the computing node; and
setting a status of the logical storage space to a read-only state when it is determined that no conflicts occur in the logical storage space.

Embodiment 21. The method according to any one of embodiments 14 to 20, further comprising:
receiving a delete request for the logical storage space from the computing node;
setting the status of the logical storage space to a delete state when it is determined that no conflicts occur in the logical storage space; and
requesting the storage node to delete the physical storage space corresponding to the logical storage space.

Embodiment 22. The method according to embodiment 13, wherein after the receiving a first write request sent by the computing node, the method further comprises: obtaining N fragments of the to-be-written data in the first write request, and the requesting the storage node to write the to-be-written data to the first address comprises: requesting N storage nodes to write the N fragments to first addresses of the N storage nodes.

Embodiment 23. A data processing apparatus, wherein the apparatus is deployed in an intermediate device, the intermediate device is connected to a computing node and a storage node, a service runs in the computing node, the storage node stores data of the service, and the apparatus comprises:
a receiving unit, configured to receive a first write request that is for the data of the service and that is sent by the computing node;
a determining unit, configured to determine to write to-be-written data that is in the first write request to a first address of the storage node; and
a write unit, configured to request the storage node to write the to-be-written data to the first address.

Embodiment 24. The method according to embodiment 23, wherein the first write request is for a logical storage space corresponding to the data of the service, the intermediate device stores metadata of the logical storage space, the metadata of the logical storage space comprises an identifier of the logical storage space, address information of the logical storage space, and address information of a physical storage space corresponding to the logical storage space, the physical storage space belongs to a space in the storage node, and the first address is an address in the physical storage space.

Embodiment 25. The apparatus according to embodiment 24, wherein the determining unit is further configured to:
allocate a second address in the logical storage space to the first write request; and
determine, based on the metadata of the logical storage space, the first address to which the to-be-written data is written in the physical storage space corresponding to the logical storage space.

Embodiment 26. The apparatus according to embodiment 24 or 25, wherein the receiving unit is further configured to receive a notification message that is sent by the storage node and that is used to notify that writing of the to-be-written data is completed; and
the apparatus further comprises a notification unit, configured to: when it is determined that other write requests that are for the logical storage space and received before the first write request are completed, notify the computing node that the first write request is completed.

Embodiment 27. The apparatus according to any one of embodiments 24 to 26, wherein the apparatus further comprises:
an allocation unit, configured to request, based on information that is about the logical storage space and that is received from the computing node, the storage node to allocate a physical storage space to the logical storage space.

Embodiment 28. The apparatus according to embodiment 25, wherein the determining unit is configured to allocate the second address to the first write request among unallocated spaces of the logical storage space according to an ascending order of addresses.

Embodiment 29. The apparatus according to any one of embodiments 23 to 28, wherein the storage node comprises a first storage node and a second storage node, the second address corresponds to a first address that is in the first storage node and to which the to-be-written data is written and a first address that is in the second storage node and to which the to-be-written data is written, and
the write unit comprises:
a first write subunit, configured to request the first storage node to write the to-be-written data to the first address that is in the first storage node and to which the to-be-written data is written; and
a second write subunit, configured to request the second storage node to write the to-be-written data to the first address that is in the second storage node and to which the to-be-written data is written.

Embodiment 30. The apparatus according to any one of embodiments 24 to 29, further comprising a conflict handling unit, configured to: after receiving a read-only state setting request for the storage space from the computing node, set a status of the storage space to a read-only state when it is determined that no conflicts occur in the logical storage space.

Embodiment 31. The apparatus according to any one of embodiments 24 to 29, further comprising a conflict handling unit, configured to: after receiving a delete request for the storage space from the computing node, when it is determined that no conflicts occur in the logical storage space, set a status of the logical storage space to a delete state and request the storage node to delete the physical storage space corresponding to the logical storage space.

Embodiment 32. The apparatus according to embodiment 23, wherein the apparatus further comprises: an obtaining unit, configured to obtain N fragments of the to-be-written data in the first write request after receiving the first write request sent by the computing node; and
the write unit is configured to request N storage nodes to write the N fragments to first addresses of the N storage nodes.

Embodiment 33. An intermediate device, comprising a processing unit and a storage unit, wherein the storage unit stores executable code, and the processing unit executes the executable code to implement the method according to any one of embodiments 13 to 22.

Embodiment 34. An intermediate device comprising:
a communication interface, configured to perform data transmission with a storage node and a computing node; and
a processing unit, configured to process data received by the communication interface, to implement the method according to any one of embodiments 13 to 22.

The foregoing descriptions are merely examples of embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. A data processing method, wherein the method is performed by a network connection device, the network connection device is physically connected between a computing node and a storage node, a service runs in the computing node, the storage node stores data of the service, the network connection device manage metadata corresponding to the data of the service, and the method comprises:
receiving (S307), from the computing node, a write request for writing to-be-written data to the stoage node to offload processing of the write request from the computing node to the network connection device;
determining (S309), based on the metadata, storage address of the to-be-written data in the storage node; and
sending (S310) the to-be-written data to the storage node to store the to-be-written to the storage address of the storage node.

2. The method of claim 1, wherein the network connection device is further configured to manage a logical storage space corresponding to the data of the service.

3. The method of any one of claim 2, wherein the logical storage space corresponding to a plurality storage nodes, and the plurality storage nodes comprise different types of storage nodes.

4. The method of any one of claim 1 to 3, wherein the network connection device is further for storing the metadata in the network connection device.

5. The mothod of any one of claims 1 to 4, wherein the network connection device connets the computing node and the storage node by using a remote direct memory access (RDMA) connection.

6. The method of any one of claims 1 to 5, wherein before sending the to-be-written data to the storage node, the network connection device is further configured to divide the to-be-written data into a plurality of data fragments according to a preset erasure coding (EC) algorithm or a redundant array of independent disks (RAID) algorithm.

7. The method of any one of claim 1 to 6, further comprising performing network process to the to-be-written data.

8. A computer system, comprising a computing node, a storage node, and a network connection device;
the computing node is configured to runn a service;
the storage node is confitured to store data of the service; and
the network connection device is configured to:
physically connect the computing node and the storage node;
manage metadata corresponding to the data of the service;
receive, from the computing node, a write request for writing to-be-written data to the storage node to offload processing of the first write request from the computing node to the network connection device;
implement processing of the the first write request to store the to-be-written data to the storage node based on the metadata.

9. The computer system of claim 8, wherein the network connection device is further configured to manage a first logical storage space corresponding to the data of the service.

10. The computer system of claim 9, wherein the first logical storage space corresponding to a plurality storage nodes, and the plurality storage nodes comprise different types of storage nodes.

11. The computer system of any one of claims 8 to 10, wherein the network coonction device is further configured to store the metadata in the network connection device.

12. The computer system of any one of claims 8 to 11, wherein the network connection between the at least one storage node and the computing node is formed by using a remote direct memory access (RDMA) connection.

13. The computer system of any one of claims 8 to 12, wherein the network connection device is further configured to divide the to-be-written data into a plurality of data fragments according to a preset erasure coding (EC) algorithm or a redundant array of independent disks (RAID) algorithm.

14. The computer system of any one of claims 1 to 13, wherein the network connection device is further configured to perform network process to the to-be-written data.

15. A network connection device, configured to:
physically connect a computing node and a storage node;
manage metadata corresponding to data of a service running in the computing node;
receive, from the computing node, a write request for writing to-be-written data to the store node to offload processing of the write request from the computing node to the network connection device;
implement processing of the the write request to store the to-be-written data to the storage node based on the metadata.

16. The network connection device of claim 15, wherein the network connection device is further configured to manage a first logical storage space corresponding to the data of the service.

17. The network connection device of claim 15 or 16, wherein the first logical storage space corresponding to a plurality storage nodes, and the plurality storage nodes comprise different types of storage nodes.

18. The network connection device of any one of claim 15 to 17, wherein the network conection device is further configured to store the metadata in the network connection device.

19. The network connection device of any one of claims 15 to 18, wherein the network connection between the at least one storage node and the computing node is formed by using a remote direct memory access (RDMA) connection.

20. The network connection device of any one of claims 15 to 19, wherein the network connection device is further configured to divide the to-be-written data into a plurality of data fragments according to a preset erasure coding (EC) algorithm or a redundant array of independent disks (RAID) algorithm.

21. The network connection device of any one of claim 15 to 21, the network connection device is further configured to perform network process to the to-be-written data.
